# EUROPEAN PATENT APPLICATION

(11) **EP 1 289 326 A1**
(43) Date of publication of application: **05.03.2003**
(21) Application number: 01402259.4
(22) Date of filing: 30.08.2001
(51) Int. Cl.: H04Q 7/32

(54) **Method of verifying downloaded software and corresponding device**

(71) Applicant: MOTOROLA, INC., Schaumburg, IL 60196 (US)
(72) Inventor: Deloume, Pascal, 31170 Tournefeuille (FR); Garani, Pradeep, 31000 Toulouse (FR)
(74) Representative: Litchfield, Laura Marie

(57) **Abstract**

The present invention relates to ensuring security for software downloads to a device, in which a smart card is used for storage of secure keys and for calculations using the secure keys. The result of the calculations using the smart card are passed to the device for comparison with calculations performed by the device on the downloaded software, to verify the downloaded software. Thus the security of the keys and calculations involving the secure keys are kept secure. Preferably root security keys stored in the smart card can be updated using communication system messaging protocols.

## Description

The present invention relates to a method of verifying software downloaded from an originator to a device, and to a corresponding device. In particular, the invention relates to download verification in standardised execution environments such as the Mobile Execution Environment (MExE) and Java.

Increasingly it is becoming desirable for software to be downloaded to a portable device over the air. This allows the device to be upgraded with newly released software or enables new applications to be added to the device as these become available.

It is desirable that the device checks the authenticity of the downloaded software to determine whether, for example, the downloaded software has indeed been received from a trusted sender. In addition, it is desirable that the downloaded software should be restricted to a given domain, to avoid permission violation for the rest of the device.

This security can be ensured by keys, which are stored securely in the device such that they cannot be read or tampered with by applications except the security-checking environment. In addition it is desirable to update the keys periodically, and this must be done using a secure method.

Previously, it has been suggested to implement the security algorithms in software/hardware and then to protect them by hardware control on the processor of the terminal with memory management unit. However, this results in increased cost. In addition, the development of separate security hardware is undesirable.

The Mobile Execution Environment (MExE ), which enables software download, is currently under standardisation. Three class marks are defined in the MexE environment. Class mark 1 relates to devices utilizing the Wireless Application Protocol (WAP); class mark 2 relates to devices, such as personal digital assistants (pda) or laptops using standard edition JAVA™ (J2SE); and class mark 3 relates to small devices, such as mobile telephones, using micro-edition JAVA™ (J2ME).

J2ME is being proposed as an environment for class mark 3 devices in MExE because of its small size, which makes it suitable for environments, such as the mobile communication environment for example, in which the available memory or processing power is limited and the size of files must be limited.

However, the security model for J2ME requires server-based pre-verification, in which a server inserts basic run-time security information in the software prior to download. The receiving device can then use the run-time security information to check the security of the download and verify the sender.

It is desirable to increase the security provided for software download, particularly in a MExE class mark 3 environment, so that server-based verification is avoided and software can be downloaded from a greater variety of sources.

According to a first aspect of the present invention, there is provided a method of verifying software downloaded from an originator to a device adapted to receive, in use, a smart card having at least one secure key stored therein, comprising: receiving software and security information relating to the received software; obtaining in the smart card a first calculation result from the security information using at least one secure key; obtaining in the device a second calculation result from calculations performed on the received software; and comparing in the device first and second calculation results to verify the received software.

According to a second aspect of the invention, there is provided a device comprising: communication means for receiving software and security information relating to the received software; smart card interface means for passing the security information to a smart card coupled to the smart card interface means and for receiving from the smart card a first calculation result obtained from the security information by the smart card using at least one security key; means for obtaining a second calculation result from calculations performed on the received software; means for comparing first and second calculation results to verify the received software.

For a better understanding of the present invention, and to show how it may be brought into effect reference will now be made, by way of example to the accompanying drawings in which:
Figure 1 illustrates a known file transfer verification procedure;
Figure 2 shows a communication device;
Figure 3 illustrates a download verification procedure in accordance with the invention;
Figure 4 illustrates message creation for transfer of the root key in accordance with the invention;
Figure 5 illustrates update of the root key in accordance with the invention

The present invention is described with reference to the use of RSA cryptography. The RSA cryptography algorithm and principle are well known and therefore will not be explained in detail in this document. As will be apparent to a skilled person, other cryptography techniques may also be used in accordance with the invention.

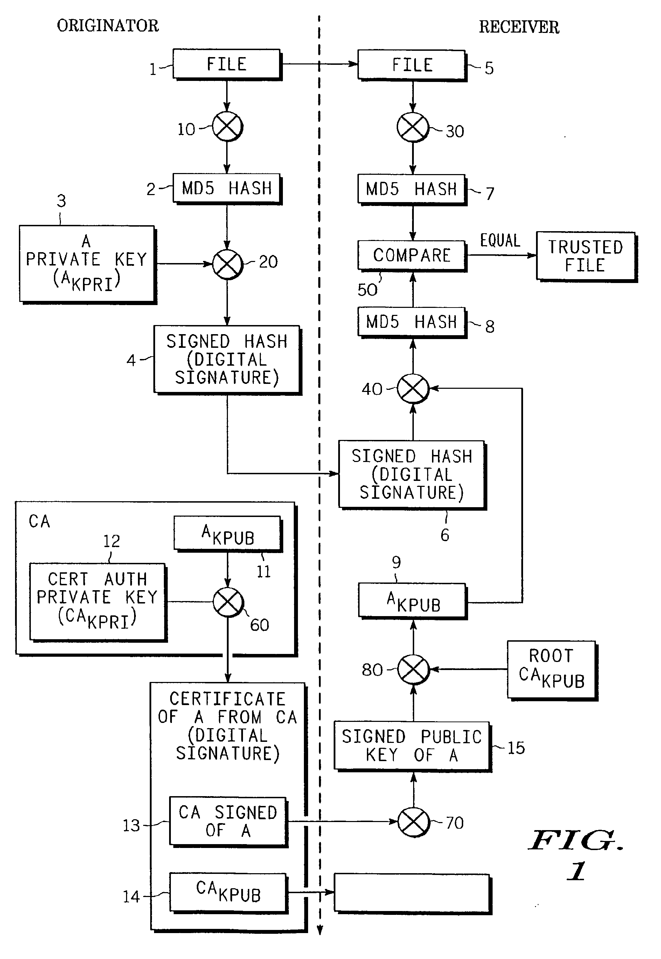

Figure 1 illustrates a known file transfer verification procedure, for verifying the authenticity of a file transferred from an originator to a receiver. The principle behind this procedure is that in addition to the transfer of the file 1 a second piece of information which is related to both the file 1 and the originator is also transferred between the originator and the receiver, which information enables the receiver to confirm that the file comes from the originator. In addition, the receiver possesses or is passed a third piece of information, which enables the receiver to confirm that the originator can be trusted and that it is therefore safe to execute the downloaded file.

In the illustrated procedure the originator generates the second piece of information by performing an MD5 hash operation 10 on the file 1 to be transferred to create an MD5 hash result 2. The MD5 hash operation is well known and will not be explained further. The MD5 hash result 2 is uniquely dependent on the file 1 and can be used to verify file 1.

Next the originator performs an RSA algorithm operation 20 on the MD5 hash result 2 using the private key of the originator (A_{KPRI}) 3 to generate a signed hash (or digital signature) 4. The signed hash 4 thus depends upon the file and is signed as having been originated by A and can therefore act as the second piece of information mentioned above. The file 1 and the signed hash 4 are transferred to the receiver resulting in a received file 5 and a received signed hash 6.

In order to verify the received file, the receiver independently generates two versions of the MD5 hash result. The first MD5 hash result 7 is generated from the received file 5 using a MD5 hash operation 30, and the second MD5 hash result 8 is obtained from the received signed hash 6 by performing an RSA operation 40 on the received signed hash 6 using the public key of the originator A (A_{Kpub}) 9 held by the receiver. The first MD5 hash result 7 and the second MD5 hash result 8 are compared in a comparison operation 50 and if they are found to be equal, the received file 5 is authenticated and can be executed.

In order for the above authentication scheme to work, the receiver must have authenticated access to the public key of the originator A (A_{Kpub}). This is achieved in the illustrated procedure through the use of a certification authority. The certification authority is trusted by the receiver, such that received information signed by the certification authority is trusted by the receiver.

Therefore, as shown the certification authority performs an RSA algorithm operation 60 on the public key of the originator (A_{KPub}) 11 using the private key of the certification authority (CA_{KPRI}) 12 resulting in a signed key 13 of the originator A. The signed key 13 and the certification authority public key (CA_{Kpub}) 14 are transferred to the receiver. As shown, if necessary the signed key 13 undergoes a certificate chain analysis operation 70 to obtain the received signed public key 15 of the originator A.

A certificate chain analysis operation is required if the certificate authority CA is not known by the receiver. In this case, the certificate authority is requested to provide its public key signed by a further certificate authority using the private key of the further certificate authority. If the further certificate authority is trusted by the receiver, the receiver will be able to use the public key of the further signature authority to verify that the public key of the signed authority has been signed by the private key of the further signature authority. The receiver can then trust the certificate authority and can use the received certificate authority public key. If the further certificate authority is not trusted by the receiver, use must be made of an additional certificate authority.

The receiver has stored therein a root certification authority public key. The root certification authority is the most trusted by the receiver, and ultimately the stored public key of the root certification authority can be used to verify all other certification authorities in a certificate chain situation.

The receiver then performs an RSA operation 80 on the resulting signed public key of the originator (A_{KPub}) (15) using the root certification authority public key (Root CA_{KPub}) to obtain the public key of the originator (A_{KPub}) 9. The public key of the originator (A_{KPub}) 9 is then used in the RSA operation 40 as described above.

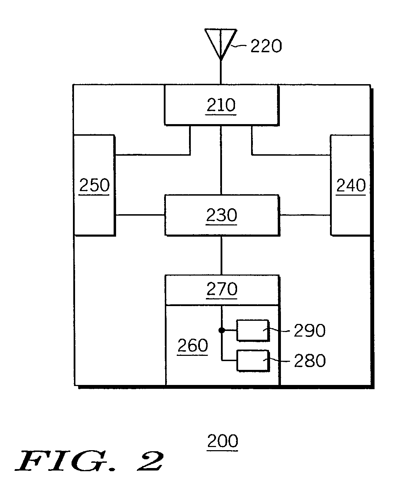

The present invention is described below with reference to a communication device, such as a mobile telephone. However, it will be clear to a skilled person that the present invention is also applicable to other devices. An exemplary communication device 200 is now described with reference to Figure 2.

The communication device 200 shown in Figure 2 comprises a communication interface 210 coupled to an antenna 220 and to a processor 230. The processor 230 and the communication interface 210 are also coupled to volatile memory 240 and to a non-volatile memory 250. A smart card 260 is coupled to a smart card interface 270, which is also coupled to the processor 230. The smart card is equipped with its own processor 280 and memory 290.

The communication interface 210 comprises the necessary components to convert radio frequency signals for the communication device 200 received by the antenna 220 to digital signals to be stored in volatile memory 240 and/or non-volatile memory 250 and/or to be processed by processor 230, and to convert digital signals from the memories 240 and 250 and/or the processor 230 to radio frequency signals to be transmitted by the antenna 220. Thus communication interface 210 comprises radio frequency transmitter and receiver means and signal processor means, for example.

The volatile memory 240 and non-volatile memory 250 are used for storing program and other data for operation of the communication device 200.

The smart card is preferably a subscriber smart card (SIM) holding subscriber information used by the communication device 200, for example a Subscriber Identity Module card as currently used in the Global System for Mobile Communications (GSM system) and in use or proposed for other communication systems. However, it is possible that the smart card 260 may be another type of smart card received in the communication device instead of, or preferably in addition to a SIM card, for example an electronic commerce smart card.

As indicated above, the smart card is equipped with its own processor 280 and memory 290, and is capable of storing information therein and is also capable of carrying out operations or calculations on data received from the processor 230 via smart card interface 270 and of providing data or the results of such calculation to the processor 230 via smart card interface 270.

The smart card is preferably removably receivable in the communication device, for example by means of the provision of a slot in the housing of the communication device 200.

It will be appreciated by a skilled person that other components or arrangements of components within the communication device 200 are possible within the scope of the invention.

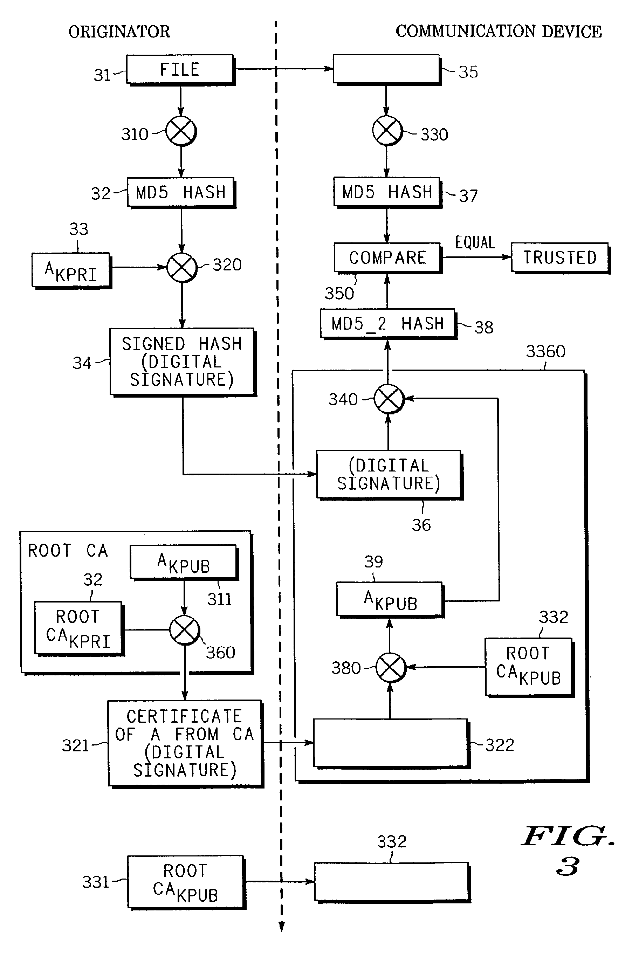

The secure download procedure in accordance with the invention will now be described with reference to Figure 3. In Figure 3 operations or data corresponding to operations or data in Figure 1 have been given similar reference numerals.

Figure 3 illustrates the download of an executable J2ME file in a MExE environment from an originator A to a device such as the communication device 200 described above with reference to Figure 2. As shown in Figure 3, box 3260 represents operations carried out and data stored in the smart card 260 of the communication device 200 shown in Figure 2, and the remaining operation and data storage is carried out in the rest of the communication device 200 shown in Figure 2.

As illustrated in Figure 2, the smart card 260 has no direct communications capability. Instead, the relevant data received by the communication device is passed by the processor 230 to the smart card 260 for storage therein and operation thereon.

In the procedure illustrated in Figure 3, the originator A performs an MD5 hash operation 310 on a file 31 to be transferred to create an MD5 hash result 32. As explained above, the MD5 hash result 32 is uniquely dependent on the file 31 and can be used to verify file 31.

Next the originator A performs an RSA algorithm operation 320 on the MD5 hash result 32 using the private key of the originator (A_{KPRI}) 33 to generate a signed hash 34. The signed hash 34 thus depends upon the file and is signed as having been originated by A and can therefore act as the second piece of information mentioned above. The file 31 and the signed hash 34 are then sent to the communication device 200 resulting in a received file 35 and a received signed hash 36. File 35 is received using antenna 220 and communication interface 210 and is stored by the processor 230 in the volatile memory 240. In contrast, the signed hash 34 is received using antenna 220 and communication interface 210 and is sent by the processor 230 to the smart card 260 via smart card interface 270 and is stored in the smart card memory 290.

As described above, in order to verify the received file, two versions of the MD5 hash result must be independently generated and compared. The first MD5 hash result 37 is generated by the communication device processor 230 from the received file 35 using a MD5 hash operation 330.

The second MD5 hash result 38 is obtained by the smart card from the received signed hash 36. The smart card processor 280 performs an RSA operation 340 on the received signed hash 36 stored in the smart card memory 390 using the public key of the originator A (A_{Kpub}) 39 stored in the smart card memory 290, as will be explained later.

The second MD5 hash result 38 is passed by the smart card processor 280 to the communication device processor 230 and the communication device processor 230 compares the first MD5 hash result 37 and the second MD5 hash result 38, calculated in the smart card 260, in a comparison operation 350. If the first MD5 hash result 37 and the second MD5 hash result 38 are found to be equal, the received file 35 is authenticated and can be executed.

In this arrangement, the smart card 260 must have authenticated access to the public key of the originator A (A_{Kpub}). This is achieved in the illustrated procedure according to Figure 3 through the use of the root certification authority public key stored in the smart card memory 290. The root certification authority is trusted by the communications device, such that received information signed by the certification authority is trusted.

In this context, there may be more than one root certification authority. For example in the context of a mobile telephone the manufacturer and/or the operator can act as a root authority. In addition, it is possible to specify one or more trusted third parties as root certification authorities. The public key for each of the root certification authorities (eg the operator public root key (OPRK); the manufacturer public root key (MPRK); and third party public root key (TPRK)) is stored in the smart card of the communication device 200, for example during provisioning of a mobile telephone SIM card.

In order that the smart card 260 has authenticated access to the public key of the originator A (A_{Kpub}), as shown the root certification authority performs an RSA algorithm operation 360 on the public key of the originator (A_{KPub}) 311 using the private key of the certification authority (RootCA_{KPRI}) 312 resulting in a certificate from A 321 signed by the root certification authority. This certificate 321 is sent to the communications device 200, is received using antenna 220 and communication interface 210 and is sent by the processor 230 to the smart card 260 via smart card interface 270 and is stored in the smart card memory 290 as certificate 322.

The Root certification authority public key (RootCA_{KPub}) 332 is already stored in the smart card memory 290, as indicated above. The smart card processor can perform an RSA operation 380 on the received certificate 322 using the Root Certification Authority public key (RootCA_{KPub}) 332 to obtain the public key of the originator A (A_{Kpub}) 39. The smart card processor can then use the obtained public key of the originator A (A_{Kpub}) 39 and the received signed hash 36 in RSA operation 340 to obtain the smart card MD5 hash value 38, as outlined above.

Also shown in Figure 3 is the transfer of the Root Certification Authority public key (RootCA_{KPub}) 331 to the communications device for storage in the smart card memory as Root Certification Authority public key (RootCA_{KPub}) 332. It is desirable to update the root certification authority keys periodically in a secure manner otherwise the security of the system will be compromised.

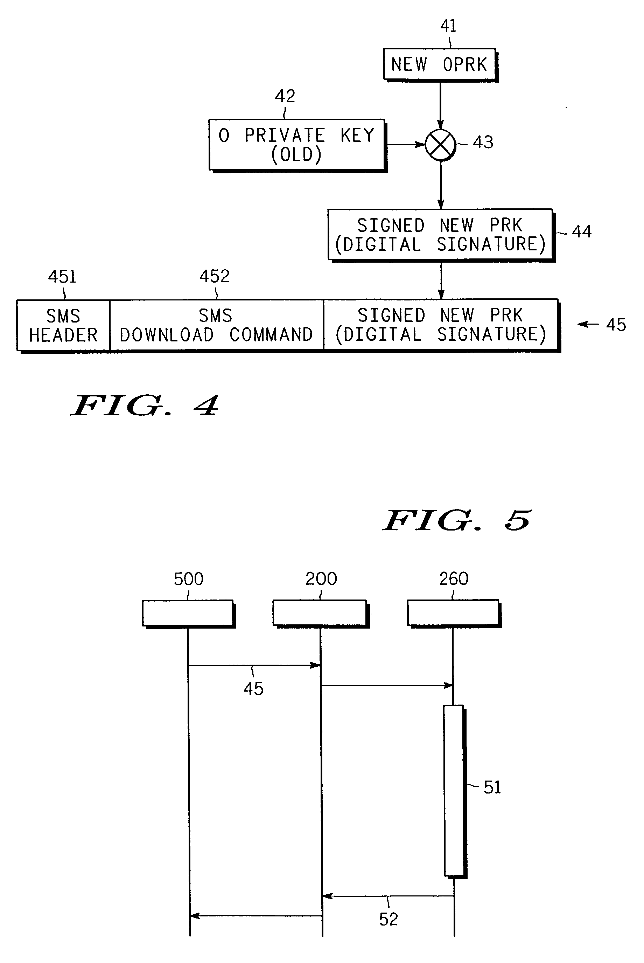

A preferred mechanism for the secure transfer of a Root public key (for example OPRK, MPRK, TPRK) using communication system messaging technology will now be explained with reference to Figures 4 and 5.

Figure 4 illustrates message creation for transfer of a root key, for example the operator public root key (OPRK), to the smart card 360 in accordance with the invention. In this exemplary arrangement, the update is achieved using a SMS message as provided in the GSM/UMTS systems, although other messaging techniques could be used.

An RSA operation is performed on the new OPRK 41 with the operator's private root key 42 corresponding to the old OPRK stored in the smart card 360. As mentioned earlier, the old OPRK may have been stored in the smart card 360 during provisioning, or during a previous update of the root key. The resulting signed new operator public root key 44 is included in an SMS message 45 to be sent to the communication device. The SMS message 45 has an SMS header portion 451 and SMS download command 452 in addition to the signed new operator public root key 44. The SMS message in encrypted by the communication system prior to being sent to the communication device.

Figure 5 illustrates update of the root key in the communication device in accordance with an embodiment of the invention. In this exemplary embodiment of the invention, the SMS message 45 sent by the network 500 to the communication device 200 is passed to the smart card 260. Once the encrypted SMS message 45 is received in the smart card 260, the smart card 260 undertakes an SMS message analysis and memory update procedure 51.

In the SMS message analysis and memory update procedure 51 the SMS message is initially decrypted and the SMS message is analysed. The download command 452 instructs the smart card 260 that a new OPRK is being sent to the smart card 260. The smart card 260 performs an RSA operation on the received signed new OPRK using the old OPRK already stored in the smart card 260 to verify the identity of the sender. The OPRK stored in the smart card can then be updated using the new value. Preferably a confirmation message 52 is sent from the smart card 260 to the network using the communication interface 210 of the communication device 200.

Although the update of the operator public root key (OPRK) has been described above, it would be possible to update any root key stored in the smart card in the same way.

In accordance with an alternative embodiment of the invention, the manufacturer root public key may be stored partially in the smart card memory and partially in the communications device memory. This arrangement is more secure since the communication device then contributes to ensuring the security of download in the manufacturer domain using the manufacturer root public key. This helps to prevent an insecure smart card from changing the manufacturer public root key via download authorization.

Thus the present invention proposes a solution to ensuring security for software downloads to a device, in which a smart card is used for storage of secure keys and for calculations using the secure keys. The result of the calculations using the smart card are passed to the device for comparison with calculations performed by the device on the downloaded software, to verify the downloaded software.

Since the secure keys are stored on the smart card and calculations involving the secure keys are performed by the smart card, the security of the secure keys can be ensured. In addition, the result of the calculation performed on the received file by the device is not passed to the smart card.

As will be apparent to a skilled person, the invention could be implemented in a different form from that shown herein, and so the invention is intended to encompass all arrangements and variations within the scope of the appended claims.

## Claims

1. A method of verifying software downloaded from an originator to a device adapted to receive, in use, a smart card having at least one secure key stored therein, comprising:
receiving software and security information relating to the received software;
obtaining in the smart card a first calculation result from the security information using at least one secure key;
obtaining in the device a second calculation result from calculations performed on the received software; and
comparing in the device first and second calculation results to verify the received software.

2. The method as claimed in claim 1, further comprising the steps of;
receiving additional signed originator key information;
obtaining, in the smart card, originator key information from the received signed originator key information using a root security key stored therein; and
obtaining in the smart card the first calculation result from the security information using the originator key information.

3. The method as claimed in claim 2 wherein the root security key stored in the smart card is updated by
receiving a root security key update message containing a new root security key;
verifying the new root security key using the existing root security key stored in the smart card;
storing the new root security key in the smart card.

4. The method as claimed in claim 2 or 3, wherein part of the root security key is stored in the smart card and part of the root security key is stored in the device.

5. The method as claimed in any preceding claim, wherein the smart card is a Subscriber Identity Module (SIM) card

6. A device comprising
communication means for receiving software and security information relating to the received software;
smart card interface means for passing the security information to a smart card coupled to the smart card interface means and for receiving from the smart card a first calculation result obtained from the security information by the smart card using at least one security key;
means for obtaining a second calculation result from calculations performed on the received software;
means for comparing first and second calculation results to verify the received software.

7. The device as claimed in claim 6 wherein
the communications means also receives additional signed originator key information; and
the smart card interface also passes the additional signed originator key information to the smart card, which obtains originator key information from the received signed originator key information using a root security key stored therein; and obtains the first calculation result from the security information using the originator key information.

8. The device as claimed in claim 7 wherein
the communications means also receives a root security key update message containing a new root security key; and
the smart card interface passes the root security key update message to the smart card, which verifies the new root security key using the existing root security key stored in the smart card; and stores the new root security key in the smart card.

9. The device as claimed in claim 7 or 8, wherein the device comprises storage means and part of the root security key is stored in the smart card and part of the root security key is stored in the storage means.

10. The device as claimed in one of claims 6-9, wherein the smart card is a Subscriber Identity Module (SIM) card.
